# NOUVEAU FASCICULE DE BREVET EUROPEEN

(11) **EP 3 129 331 B2**
(45) Date de publication et mention de la décision concernant l'opposition: **22.07.2026**
(45) Mention de la délivrance du brevet: 08.11.2023
(21) Numéro de dépôt: 15718558.8
(22) Date de dépôt: 09.04.2015
(51) Int. Cl.: C03C 25/25, C03C 25/32, C03C 25/42, C03C 25/47, C04B 20/10, C04B 28/18, C04B 28/26, C04B 111/10, C03C 1/00

(54) **COMPOSITE COMPRENANT UNE LAINE MINERALE COMPRENANT UN SUCRE**
VERBUNDSTOFF AUS MINERALWOLLE MIT EINEM ZUCKER
COMPOSITE COMPRISING A MINERAL WOOL COMPRISING A SUGAR

(30) Priorité: 10.04.2014 FR 1453215
(43) Date de publication de la demande: 15.02.2017
(73) Titulaire: SAINT-GOBAIN ISOVER, 92400 Courbevoie (FR)
(72) Inventeur: YAMMINE, Joumana, F-75016 Paris (FR); BOUNY, Elodie, F-34970 Lattes (FR); OBERT, Edouard, F-60700 Fleurines (FR)
(74) Mandataire: Saint-Gobain Recherche
(86) Numéro de dépôt international: PCT/FR2015/050957
(87) Numéro de publication internationale: WO 2015/155486

(56) Documents cités:
- EP-A2- 0 768 283
- US-A- 2 904 444
- US-A1- 2009 155 603
- US-A1- 2012 315 458
- US-A1- 2013 165 553

## Description

L'invention concerne le domaine de la valorisation de résidus à base de laine minérale, notamment de laine de roche ou de laine de verre. De façon usuelle, les résidus de production de laine minérale sont agglomérés sous forme de composites conformés, désignés fréquemment par le terme de « briquettes » (d'autres dénominations étant disponibles essentiellement selon la géométrie du composite conformé) pour être recyclés dans le procédé de fabrication de laine minérale. Ces composites conformés, notamment sous forme de briquettes, peuvent être introduits dans un four de fusion, qui alimente lui-même un dispositif de fibrage. Cette technique est particulièrement utile lorsque l'on souhaite réintroduire des matières particulaires dans des fours où règnent de fortes circulations gazeuses.

L'invention concerne donc aussi le domaine de la fabrication de la laine minérale. Selon un procédé, dit de centrifugation externe, de la laine minérale est obtenue à partir d'une masse minérale en fusion déversée sur un ensemble de rotors en rotation, la masse fondue étant éjectée de la périphérie des rotors et prise en charge par un courant gazeux d'étirage et se transformant ainsi en fibres. La laine est ensuite imprégnée par une composition d'encollage. La composition d'encollage est pulvérisée sur les fibres pendant leur formation puis la masse de fibres encollées est collectée sur un organe récepteur et convoyée dans un dispositif de mise en forme de bande de feutre de laine minérale. L'encollage est destiné à donner sa cohésion à la laine en formant après cuisson et réticulation des ponts entre les fibres.

Ce procédé produit une quantité non négligeable de résidus, d'une part au moment du fibrage, où des résidus comprenant de la matière minérale solidifiée et de l'encollage, ladite matière minérale solidifiée comprenant généralement des fibres et des grains (« shot » en anglais) ; et d'autre part après formation du feutre par suite de découpes destinées à rectifier les bords du feutre ou à mettre les produits à dimension. Enfin, il arrive que la production ne fournisse pas la qualité attendue et certains lots partent au rebut.

Selon un autre procédé, dit à centrifugation interne, la matière fondue est cette fois fibrée au travers d'un organe de fibrage en forme d'assiette percée à sa périphérie, la matière étant éjectée au travers de la paroi percée de l'assiette sous forme de filaments qui sont étirés par un courant gazeux d'étirage. Cette technique produit un rendement de fibrage très supérieur à la technique de centrifugation externe et ne produit pas de grains. Cependant les déchets de coupe sont inévitables.

Ces résidus à base minérale sont valorisables dans le circuit de fabrication de laine minérale, notamment par refusion avec les matières premières alimentant le four de fusion. Ce recyclage passe généralement par la préparation de composites contenant ces résidus, lesdits composites étant réalisés par conformation, notamment un moulage, d'un mélange de résidus de laine minérale avec un liant minéral comprenant généralement un ciment, suivie d'un traitement assurant la prise du liant. La mise en forme de briquettes permet de convoyer facilement ces résidus et facilite leur processus de réutilisation, notamment leur réintroduction dans un four de fusion.

Dans le cas d'une laine de roche, ce four peut notamment être du type cubilot, dans lequel la charge de matière première solide faite de blocs de roches naturelles forme avec des blocs de combustible solide (coke) en couches alternées une colonne autoportante au travers de laquelle s'échappent les gaz de combustion. A mesure que la fusion s'opère dans la partie basse de la colonne, cette dernière est rechargée par le haut avec du combustible et de la roche. Ces fours n'admettent pas l'introduction de matières premières en poudre ou particules légères qui ne présentent pas l'aptitude requise à former une couche de matière solide stable dans la colonne verticale. La transformation en composite conformé comme en briquette confère cette aptitude. On cherche à ce que la briquette développe une bonne résistance mécanique assez rapidement après sa mise en forme et à ce qu'elle ne se désagrège pas lors de sa manipulation et son transport.

Selon une évolution récente de la technique, il a été proposé de fabriquer de la laine minérale avec des encollages dont la composition fait appel à des matières premières issues de ressources renouvelables, en particulier des sucres. Cependant on s'est aperçu que l'utilisation d'un encollage comprenant un sucre pour lier la laine minérale menait à des briquettes peu solides, rendant très difficile leur fabrication et/ou utilisation.

L'invention résout le problème susmentionné.

Le US2013/165553 enseigne une briquette utilisable en tant que charge minérale dans la production de fibres de verre synthétiques comprenant un ciment et du déchet recyclé de laine minérale comprenant des fibres en contact avec un liant non réticulé comprenant un sucre et un produit de réaction d'un acide polycarboxylique avec une amine.

Le EP0768283A2 enseigne la formation de briquettes moulées fabriquées par moulage par compression, comprenant des fibres et un liant à base de lignine.

L'invention repose en partie sur la découverte que le sucre contenu dans l'encollage interagissait défavorablement avec le ciment en gênant et même en empêchant sa solidification. Même si l'utilisation d'un ciment n'est pas exclue dans le cadre de la présente invention, on recommande de baisser sa proportion et de le remplacer au moins partiellement voire totalement, par un liant minéral dont la description va suivre.

L'invention concerne un procédé de préparation d'un composite conformé selon la revendication 1. La conformation fait généralement intervenir un moulage.

L'expression « fragments de laine minérale » désigne ici tous résidus issus de la production de laine minérale, y compris les matières minérales solidifiées sous forme de grains ou infibrés, ou récupérées sous forme d'envols solides, ou des paquets de fibres récupérés (par lavages) sur les différentes surfaces réceptrices ou convoyeuses, ainsi que du feutre de laine minérale découpé.

L'expression « non-cimentaire » indique que le composé auquel elle est attachée n'est pas un ciment. Un ciment est une matière anhydre en poudre comprenant du silicate de calcium cristallisé ou de l'aluminate de calcium cristallisé. C'est un composé minéral hydraulique conduisant à la formation en présence d'eau de silicate de calcium hydraté ou d'aluminate de calcium hydraté. Un ciment est essentiellement cristallisé et contient moins de 10% en poids d'amorphe. Dans un ciment, le silicate de calcium ou l'aluminate de calcium sont des phases cristallisées. On connait le ciment Portland, le ciment blanc, le ciment alumineux, le ciment sulfo-alumineux, le ciment prompt. Un laitier et un silicate d'alcalin ne sont pas considérés par l'homme de métier comme étant des ciments.

Le porteur de silice non-cimentaire vise une matière ayant des propriétés hydrauliques, qui forme des ions silicates en présence d'eau. Le porteur de silice non-cimentaire peut éventuellement présenter un caractère cristallin s'il se dissout aisément dans l'eau. C'est le cas notamment d'un silicate de sodium, lequel peut notamment être introduit dans le mélange sous forme de solution aqueuse. Par contre, si l'on utilise un laitier comme porteur de silice non-cimentaire, il convient de préférence que celui-ci soit amorphe à plus de 80% en poids et de manière encore préférée à plus de 90% en poids, qu'il comprenne au moins 10% en poids de silice, et qu'il présente une granulométrie fine, notamment telle que son D50 soit inférieur ou égal à 100µm et de manière encore préférée inférieure ou égal à 50µm. De tels laitiers peuvent être obtenus comme sous-produits de l'industrie sidérurgique. Ils tiennent leur structure vitreuse, c'est-à-dire leur caractère essentiellement amorphe, des traitements de trempe à l'eau qui leur sont appliqués après collecte, ce qui leur confère des propriétés hydrauliques latentes. Lorsqu'il est sec, le porteur de silice non-cimentaire est de préférence un composé solide minéral totalement ou partiellement amorphe. Il est amorphe de préférence à plus de 80% en poids et de manière encore préférée à plus de 90% en poids. Il comprend de préférence au moins 10% en poids de silice (SiO₂) et de manière encore préférée au moins 20% en poids de silice. Il comprend éventuellement de l'alumine. Il peut contenir, en moindre quantité, de l'oxyde de fer, de l'oxyde de métal alcalin, de l'oxyde de métal alcalino-terreux, un phosphate, un sulfate, un sulfure, de l'oxyde de titane. Il est de préférence suffisamment fin pour se dissoudre au moins partiellement dans un milieu aqueux. Ainsi, la granulométrie du porteur de silice non-cimentaire est de préférence telle que le D50 soit inférieur ou égal à 100µm et de manière encore préférée inférieure ou égal à 50µm. En application verrière, ce porteur de silice est source de SiO₂ dans le verre final.

Le porteur de silice peut notamment être choisi dans la liste suivante :
- un silicate alcalin ;
- argile calcinée ou naturelle, kaolinite, illite, montmorillonite ;
- kaolin calciné ou kaolin déshydraté tel que le métakaolin principalement amorphe pouvant contenir des cristaux de kaolinite ;
- fumée de silice,
- cendre volante (classe C, class F),
- cendres de biomasse,
- laitier de haut-fourneau,
- laitier d'aciérie ;
- cendre de cosse de riz, balle de riz,
- pouzzolane naturelle ou synthétique calcinée,
- cendre volcanique naturelle ou calcinée,
- diatomite.

De la liste ci-dessus, on préfère utiliser des composés peu onéreux comme : un laitier, une cendre volante, une pouzzolane naturelle ou synthétique calcinée, de l'argile calcinée ou naturelle, un métakaolin.

Un laitier est un sous-produit de l'industrie sidérurgique et présente généralement un ratio SiO₂/CaO (en poids) < 1,5 et la somme de sa teneur en CaO et en SiO₂ représente plus de 45% de son poids.

Le porteur d'alcalin non-cimentaire contient un alcalin et forme des ions alcalins en présence d'eau. Il comprend de préférence au moins 20% en poids d'alcalin (il s'agit du pourcentage en l'élément alcalin comme Na ou K, et non pas du pourcentage en son oxyde) et de préférence au moins 30% en poids d'alcalin. Le porteur d'alcalin non-cimentaire peut être choisi dans la liste suivante:
- R-OH, R₂CO₃, RHCO₃, R₂SO₄ avec R choisi parmi Na, K ou Li
- silicate de sodium anhydre ou sous forme hydratée (métasilicate Na₂SiO₃, disilicate Na₂Si₂O₅, orthosilicate Na₄SiO₄ ou pyrosilicate Na₈Si₂O₇) ; un silicate d'alcalin (de potassium ou de lithium).

Un porteur d'alcalin non-cimentaire préféré peut être choisi parmi: NaOH, Na₂CO₃, NaHCO₃, un trona (carbonate de sodium naturel), un silicate d'alcalin. La soude NaOH est le porteur d'alcalin non-cimentaire encore préféré du point de vue de sa réactivité. En application verrière, ce porteur d'alcalin est source d'oxyde d'alcalin (notamment Na₂O ou K₂O) dans le verre final. Si l'usage de soude pose un problème de corrosion du matériel, on peut lui préférer le carbonate de sodium qui est également particulièrement efficace.

Le mélange comprend de l'eau. Cette eau peut provenir en grande partie de l'humidité des résidus prélevés dans l'installation de fibrage qui met en oeuvre de grandes quantités d'eau, notamment pour rassembler les résidus. De l'eau peut aussi être introduite dans le mélange pour atteindre à la fois une bonne qualité de mélange et une bonne aptitude au moulage, voire à la compaction.

Le mélange contient également de préférence un porteur d'alcalino-terreux non-cimentaire. Le porteur d'alcalino-terreux non-cimentaire contient un alcalino-terreux et forme des ions alcalino-terreux en présence d'eau. Il comprend de préférence au moins 10% en poids d'alcalino-terreux (il s'agit du % en l'élément alcalino-terreux comme Ca ou Mg, et non pas du pourcentage en son oxyde) et de préférence au moins 20% en poids d'alcalino-terreux. Le porteur d'alcalino-terreux non-cimentaire peut être choisi dans la liste suivante :
- calcaire ou craie (CaCO₃)
- chaux vive CaO ou éteinte Ca(OH)₂, chaux magnésienne ou dolomie (CaMg(CO₃)₂),
- aragonite, vatérite ou autres polymorphes de CaCO₃.

Un laitier peut être à la fois porteur de silice non cimentaire et porteur d'alcalino-terreux non cimentaire, leur teneur en alcalino-terreux étant généralement supérieure à 30% en poids. Comme porteur d'alcalino-terreux non-cimentaire préféré, on peut citer : un calcaire, une dolomie, une chaux vive. La granulométrie du porteur d'alcalino-terreux non-cimentaire a une granulométrie de préférence telle que le D50 est inférieure à 100 µm et de manière encore préférée inférieure à 50 µm. En application verrière, ce porteur d'alcalino-terreux est source d'oxyde d'alcalino-terreux (notamment CaO ou MgO) dans le verre final.

On peut introduire dans le mélange une charge minérale qui peut être choisie parmi des matières minérales inertes vis-à-vis du système liant du composite, qui peuvent être des granulats utiles à la stabilité mécanique du composite conformé ou des composants utiles pour la charge vitrifiable dans une perspective de valorisation en fusion verrière notamment pour sa teneur en fer. Les granulats présentent généralement un D50 supérieur à 200 µm, notamment supérieur à 1 mm. La charge minérale peut être au moins une charge choisie parmi un laitier non réactif ou un gravier. Il peut s'agir de granulats provenant de filières industrielles de recyclage valorisant des sous-produits (ou coproduits) industriels ou issus de la démolition de bâtiments ou de voiries (broyats de bétons, briques, recyclage de ballasts de chemin de fer, de croûtes ou de fraisats de revêtements routiers ou de terrils miniers). Le laitier ici éventuellement utilisé est grossier et n'est pas considéré comme étant porteur de silice non-cimentaire au sens ci-dessus donné, car ne formant pas particulièrement d'ions silicates en présence d'eau et étant par ailleurs cristallin à plus de 20% de son poids et étant de forte granulométrie avec un diamètre médian D50 supérieur à 50µm, par exemple un D50 supérieur à 200 µm, notamment supérieur à 1 mm. Il en est de même pour le gravier. Il peut s'agir notamment de laitiers LD issus de convertisseurs, que l'on fait solidifier sans traitement de trempe après leur prélèvement, ce par quoi ils cristallisent. Cette charge minérale, inerte dans la mesure où elle ne participe pas à la chimie de la solidification de la briquette, est néanmoins source de matière première de la fibre minérale qui sera fabriquée lorsque les briquettes seront réutilisées pour la fusion. Cette charge de granulats peut être introduite dans le mélange formant la masse à mouler et donc dans le composite conformé à hauteur de 5 à 50% en poids.

Le mélange est de préférence réalisé en pH basique, généralement de pH au moins égal à 10 et de manière préférée au moins égal à 11. Un tel pH est généralement créé par le porteur d'alcalin, notamment NaOH. Ce fort pH rend le milieu agressif vis-à-vis des différents porteurs qui larguent alors plus aisément leurs ions en solution.

Le mélange selon l'invention se solidifie rapidement, avec ou sans charge minérale inerte. Généralement, dans le cadre d'un procédé industriel, une telle charge minérale est présente. Le porteur de silice non-cimentaire et le porteur d'alcalin non-cimentaire sont les deux ingrédients principaux du liant minéral allant se répartir et durcir autour de la matière non solubilisée. La présence en outre dans le mélange d'un porteur d'alcalino-terreux est préférée. Dans le cas de la présence d'un porteur d'alcalino-terreux non-cimentaire dans le mélange, les ions alcalino-terreux créés dans l'eau de mélange vont également participer à la formation du liant minéral.

Dans un mélange selon l'invention particulièrement adapté, le porteur de silice non-cimentaire comprend un silicate de sodium ou un laitier, ledit laitier comprenant au moins 10% en poids de silice, étant amorphe à plus de 80% de son poids et son D50 étant inférieur à 100µm, le porteur d'alcalin non-cimentaire comprend de la soude ou du silicate de sodium ou du carbonate de sodium, un porteur d'alcalino-terreux non-cimentaire comprenant Ca(OH)₂ ou CaCO₃ étant également présent dans ledit mélange.

La composition d'encollage contenant le sucre contient généralement celui-ci à raison de 30 à 90% en poids de la matière sèche de l'encollage (% de sucre sec sur le poids total d'encollage sec).

L'expression « sucre » utilisée dans le contexte de la présente invention désigne une ou plusieurs molécules choisies parmi les monosaccharides (oses) oligosaccahrides ou polysaccharides,

Le sucre est au moins un saccharide choisi parmi les saccharides réducteurs, non réducteurs et hydrogénés. L'expression « saccharide réducteur » doit être entendue au sens conventionnel, à savoir un monosaccharide ou un polysaccharide porteur d'un groupe OH hémiacétalique libre, ce groupe ayant notamment une action réductrice sur les solutions cupro-alcalines. A titre d'exemples de monosaccharides réducteurs, on peut citer les saccharides réducteurs renfermant 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que glucose, le mannose et le galactose.

L'expression « saccharide non réducteur » doit être entendue au sens conventionnel, à savoir qu'elle désigne un saccharide constitué de plusieurs motifs saccharidiques dont le carbone 1 porteur du groupe OH hémiacétalique est engagé dans une liaison. Un saccharide réducteur au sens de l'invention ne présente aucune action réductrice sur les solutions cupro-alcalines. A titre d'exemples de tels saccharides non réducteurs, on peut citer les diholosides tels que le tréhalose, les isotréhaloses, le saccharose, et les isosaccharoses (« isosucroses » en anglais); les triholosides tels que le mélézitose, le gentianose, le raffinose, l'erlose et l'umbelliférose; les tétraholosides tels que le stachyose; et les pentaholosides tels que le verbascose.

Par « saccharide hydrogéné », on entend l'ensemble des produits résultant de la réduction, de quelque manière que ce soit, d'un saccharide choisi parmi les monosaccharides, les oligosaccharides, les polysaccharides linéaires, ramifiés ou cycliques, et les mélanges de ces produits, notamment les hydrolysats d'amidon. A titre d'exemples de saccharides hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

L'encollage comprenant le sucre peut comprendre d'autres composés tels qu'un agent réticulant, qui peut être choisi parmi des acides organiques polyfonctionnels monomères ou polymères, notamment de l'acide citrique, des amines primaires ou secondaires, de l'ammoniaque, des sels métalliques ou ammonium d'acides organiques ou inorganiques, notamment du sulfate d'ammonium ou d'alcalins ou de métaux. Il peut aussi comprendre un composé réactif à insaturation éthylénique, qui peut notamment être le produit de réaction de l'anhydride maléique et de tétraéthylpentamine, particulièrement réactif avec les sucres non réducteurs. Il peut aussi contenir des additifs tels qu'un silane comme un silane à groupe terminal polaire par exemple aminosilane en tant qu'agent de couplage, un silicone en tant qu' agent hydrofugeant. A titre d'illustration de documents décrivant des compositions d'encollage utiles dans l'invention, on peut citer les documents US2010/0282996, US2012/0263934, WO2012/168619, WO2012/168621, incorporés par référence.

Les fragments de laine minérale comprennent l'encollage comprenant le sucre avant même d'être introduits dans le mélange et de venir au contact des autres ingrédients du mélange (à part le cas échéant un peu d'eau déjà présente sur les fragments de laine minérale). L'introduction dans le mélange de la laine minérale, de l'encollage et du sucre est donc simultanée, ces trois ingrédients étant associés au sein des fragments de laine minérale préalablement à leur introduction dans le mélange.

Les fragments de laine minérale comprennent généralement une laine de roche ou une laine de verre. Les fragments de laine minérale sont généralement introduits dans le mélange à raison de 10 à 60% en poids du mélange.

Les fragments de laine minérale comprenant l'encollage comprenant du sucre peuvent être un résidu de fabrication de laine de roche. Les composants principaux de la laine de roche sont :
SiO₂ : 32 à 47% en poids
Al₂O₃ : 15 à 22% en poids
CaO+MgO : 20 à 40% en poids
Oxyde de fer : 5 à 15% en poids

Les fragments de laine minérale comprenant l'encollage comprenant du sucre peuvent être un résidu de fabrication de laine de verre conventionnelle. Les composants principaux de cette laine de verre sont :
SiO₂ : 50 à 75% en poids
Al₂O₃ : 0 à 8% en poids
CaO+MgO : 5 à 20% en poids
Oxyde de fer : 0 à 3% en poids
Na₂O+K₂O : 12 à 20% en poids
B₂O₃ : 2 à 10% en poids

Les fragments de laine minérale comprenant l'encollage comprenant du sucre peuvent être un résidu de fabrication de laine de verre riche en alumine. Les composants principaux de cette laine de verre riche en alumine sont :
SiO₂ : 35 à 50% en poids
Al₂O₃ : 10 à 30% en poids
CaO+MgO : 12 à 35% en poids
Oxyde de fer : 2 à 10% en poids
Na₂O+K₂O : 0 à 20% en poids

Les fragments de laine minérale comprenant l'encollage comprenant du sucre sont généralement introduits dans le mélange à raison de 10 à 60% en poids (pourcentage de fragments de laine sèche, étant entendu que lesdits fragments sont généralement introduits dans le mélange à l'état humide). La laine minérale peut éventuellement être légèrement broyée avant d'être introduite dans le mélange de façon à faciliter le mélange mais elle garde son caractère fibreux puisque l'on distingue nettement à l'œil nu des fibres de longueur supérieure à 5 mm.

La composition d'encollage comprise dans les fragments de laine minérale est généralement présente à raison de 0,1 à 10% en poids et plus particulièrement à raison de 0,5 à 7% en poids de matière sèche d'encollage par rapport au poids total de fragments de laine sèche.

La somme du poids des porteurs de silice non-cimentaire et d'alcalin non-cimentaire peut représenter de 5 à 30% en poids du mélange. Bien entendu, si un composé a la propriété d'être à la fois porteur de silice non-cimentaire et porteur d'alcalin non-cimentaire, on ne le compte qu'une seule fois dans la détermination de cette somme en poids.

De préférence, la somme du nombre de mole de silice introduit dans le mélange par le porteur de silice non-cimentaire et du nombre de mole d'alcalin introduit dans le mélange par le porteur d'alcalin non-cimentaire est supérieure à 0,5 mole par kg de mélange. Cette somme est généralement comprise entre 0,5 et 3 moles par kg de mélange.

De préférence, le rapport du nombre de mole de silice introduit dans le mélange par le porteur de silice non-cimentaire sur le nombre de mole d'alcalin introduit dans le mélange par le porteur d'alcalin non-cimentaire va de 0,2 à 3.

De préférence, le porteur de silice non-cimentaire introduit dans le mélange au moins 0,1 mole de silice par kg de mélange, notamment jusqu'à 3 moles de silice par kg de mélange et de préférence de 0,1 à 2 moles de silice par kg de mélange.

De préférence, le porteur d'alcalin non-cimentaire introduit dans le mélange au moins 0,1 mole d'alcalin par kg de mélange, et de préférence de 0,1 à 1,5 moles d'alcalin par kg de mélange.

La présence d'un porteur d'alcalino-terreux est préférée. S'il est présent, de préférence, le porteur d'alcalino-terreux non-cimentaire introduit de préférence dans le mélange au moins 0,3 moles d'alcalino-terreux par kg de mélange, notamment jusqu'à 3 moles d'alcalino-terreux par kg de mélange, et de préférence de 0,3 à 2 moles d'alcalino-terreux par kg de mélange.

On peut ne pas introduire de ciment dans le mélange et si du ciment est introduit dans le mélange, il l'est à raison de moins de 8% et de préférence moins de 4% et de manière encore préférée moins de 3% en poids du mélange. Le rapport de la masse de ciment sur la masse de porteur de silice non-cimentaire, lequel comprend de préférence au moins 10% en poids de silice, est inférieur à 1 et de manière préférée inférieure à 0,5.

Selon un mélange particulièrement adapté, le porteur de silice non-cimentaire et le porteur d'alcalino-terreux non-cimentaire comprennent un même laitier (ce qui signifie qu'ils sont présents tous deux au moins partiellement au sein du même laitier), le porteur d'alcalin non-cimentaire comprend du carbonate de sodium, du ciment étant introduit dans le mélange à raison de moins de 8% et de préférence moins de 4% et de manière encore préférée moins de 3% en poids du mélange, l'eau étant présente dans le mélange de préférence à raison de 5 à 30% du poids du mélange. De préférence, selon ce mélange particulièrement adapté, plus de 50% du nombre de moles de silice apportés au mélange par le porteur de silice non-cimentaire et plus de 50% du nombre de moles d'alcalino-terreux apportés au mélange par le porteur d'alcalino-terreux non-cimentaire sont apportés par le même laitier. De préférence, selon ce mélange particulièrement adapté, plus de 50% du nombre de moles de d'alcalin apportés au mélange par le porteur d'alcalin non-cimentaire sont apportés au mélange par du carbonate de sodium. Si du ciment est introduit dans le mélange, il l'est de préférence à raison d'au moins 0,1% en poids du mélange.

Le mélange pour la préparation de la masse à mouler peut être réalisé dans tout malaxeur adapté. Il est généralement inutile de chauffer le mélange par apport de calories de l'extérieur au mélange. La température du mélange peut monter en raison de la solubilisation de certains ingrédients comme la soude. De l'eau est introduite en suffisante quantité pour que le liant minéral se répartisse dans toute la masse à mouler mais insuffisamment de façon à ce que le composite conformé conserve sa forme au démoulage, le cas échéant après compaction. Généralement, l'eau est présente dans le mélange à raison de 5 à 30% du poids du mélange.

La masse à mouler obtenue par le mélange est ensuite transformée en composite conformé, notamment en briquettes, par moulage et éventuellement compaction. Notamment, la masse à mouler peut être mise dans un moule, vibrée pour éliminer l'air emprisonné, puis éventuellement compactée en appliquant une pression sur l'une des faces mobile du moule. Les briquettes peuvent par exemple avoir un volume supérieur à 20 cm³, notamment compris entre 100 et 1000 cm³.

Le composite conformé durcit ensuite naturellement. Il peut sécher avec le temps, de sorte que sa teneur en eau peut être fortement réduite avec le temps de stockage. Sa teneur en eau peut varier selon ses conditions de stockage.

L'invention a également pour objet un composite conformé obtenu par le procédé selon l'invention.

L'invention a enfin pour objet un procédé de fabrication de laine minérale, dans lequel on produit une masse en fusion que l'on transforme en laine minérale au moyen d'un dispositif de fibrage, un composite conformé obtenu selon l'invention étant introduit en tant que charge vitrifiable dans une enceinte de fusion tel qu'un four cubilot.

Dans les exemples suivants, on présente d'abord une série d'exemples (A) de formulation liante de base démontrant l'efficacité du mélange selon l'invention en présence de fibres pour préparer des composites conformés dans un cadre expérimental. Dans une autre série de mélanges (B), les formulations intègrent des granulats de charges minérales.

### EXEMPLES A1 à A17

On mélange dans un malaxeur les ingrédients indiqués dans le tableau 1. Les quantités indiquées sont des parties en poids en grammes de matière sèche, hormis bien entendu la colonne « eau totale » qui additionne toute l'eau introduite dans le mélange, de quelque façon que ce soit.

Dans le tableau 1, les résidus minéraux provenaient de la récupération de poussières à différents stades du procédé de fabrication de laine minérale, et peuvent être considérés comme des matières vitrifiables de type particules ou pseudo fibres. Ils sont considérés comme étant une charge minérale inerte ne participant pas à la formation du liant.

**Tableau 1 (parties en poids)**

| **Ex N°** | **Fibre** | **Encollage comprenant du sucre** | **Résine Phénolique** | **eau totale** | **ciment** | **Laitier actif** | **silicate de sodium Na2SiO3. 5H2O** | **NaOH** | **Na2CO3** | **Ca(OH)2** | **CaCO3** | **Résidus Minéraux** |
|---|---|---|---|---|---|---|---|---|---|---|---|---|
| **A1** | 33,6 | 0,7 | | 16 | 12 | 0 | 0 | 0 | 0 | 0 | 0 | 10 |
| **A2** | 33,6 | | 0,7 | 16 | 12 | 0 | 0 | 0 | 0 | 0 | 0 | 10 |
| **A3** | 33,6 | 0,7 | | 16 | 0,6 | 11,4 | 1,44 | 1,44 | | | | 10 |
| **A4** | 33,6 | 0,7 | | 16 | 0 | 12 | 1,44 | 1,44 | | | | 10 |
| **A5** | 33,6 | 0,7 | | 16 | 0 | 12 | | | 4,32 | 1,44 | | 10 |
| **A6** | 33,6 | 0,7 | | 16 | 6 | 6 | | | | | | 10 |
| **A7** | 33,6 | 0,7 | | 16 | 0 | 12 | 4,32 | | | | | 10 |
| **A8** | 33,6 | 0,7 | | 16 | 0,6 | 11,4 | 4,32 | | | | | 10 |
| **A9** | 33,6 | 0,7 | | 16 | 0 | 12 | 4,32 | 1,44 | | | | 10 |
| **A10** | 33,6 | 0,7 | | 16 | 0 | 12 | 1,44 | 1,44 | | | 1,44 | 10 |
| **A11** | 33,6 | 0,7 | | 16 | 2,4 | 9,6 | | | 4,32 | | | 10 |
| **A12** | 33,6 | 0,7 | | 16 | 3,6 | 8,4 | | | 4,32 | | | 10 |
| **A13** | 33,6 | 0,7 | | 16 | 6 | 6 | | | 4,32 | | | 10 |
| **A14** | 33,6 | 0,7 | | 16 | 12 | 0 | | | 4,32 | | | 10 |
| **A15** | 33,6 | 0,7 | | 16 | 2,4 | 9,6 | | | 4,32 | 1,44 | | 10 |
| **A16** | 33,6 | 0,7 | | 16 | 6 | 6 | | | 4,32 | 1,44 | | 10 |
| **A17** | 33,6 | 0,7 | | 16 | 12 | 0 | | | 4,32 | 1,44 | | 10 |

Les fragments de laine minérale contenaient une fibre de laine de roche et une composition d'encollage comprenant du sucre. Le contenu de ces fragments de laine minérale a été décomposé dans le tableau 1 entre ce qui est minéral (colonne « fibre ») et la composition d'encollage. L'encollage comprenait à sec 68% en poids de saccharose, 12% en poids de sulfate d'ammonium, 0,5% en poids de silane et 19,5% en poids d'additifs du type anhydride maléique et tétraéthylpentamine, ces deux derniers composés étant mélangés ensemble avant mélange avec les autres ingrédients de la composition d'encollage.

Les fragments de laine minérale étaient introduits dans le mélange à l'état humide. Dans le tableau 1, la colonne fibre donne les quantités en fragments sans eau ni composition d'encollage. Les colonnes « encollage comprenant du sucre » et « résine phénolique » donnent les quantités en matière d'encollage ayant été déposée sur la laine de roche. La colonne « eau totale » donne la somme de l'eau initialement apportée par les fragments et l'eau ajoutée. Le ciment utilisé était un ciment portland. Le laitier actif était un laitier de haut-fourneau et comprenait (% en poids):

| | |
|---|---|
| SiO₂ | 32,3% |
| CaO | 38,2% (soit 27,3% de Ca) |
| MgO | 9,2% (soit 5,54% de Mg) |
| Al₂O₃ | 14,9% |

ainsi que d'autres oxydes en proportion mineure complétant sa composition à 100%. Le laitier était amorphe à plus de 90% en poids. Ce laitier est à la fois porteur de silice non-cimentaire et porteur d'alcalino-terreux. Sa granulométrie était fine puisque son D90 était inférieur à 90µm et son D50 était de 30 µm.

La composition d'encollage comprenait à sec 68% en poids de saccharose, 12% en poids de sulfate d'ammonium, 0,5% en poids de silane et 19,5% en poids d'additifs du type anhydride maléique et tétraéthylpentamine, ces deux derniers composés étant mélangés ensemble avant mélange avec les autres ingrédients de la composition d'encollage. Le silicate de sodium est à la fois porteur de silice et porteur d'alcalin. Il contient 28,3% en poids de SiO₂ et 21,7% en poids de Na. Il était amorphe à plus de 80% en poids.

Des éprouvettes de dimension 4cmx4cmx16cm étaient réalisées par moulage sous vibration puis démoulage. Deux types de tests ont été réalisés. Certains passaient par la réalisation d'éprouvettes 4x4x16 cm³ sur lesquelles étaient réalisés des tests de résistance à la compression, mesurés en MPa. Pour ces tests, on a utilisé les compositions du tableau 1 sans ajout au mélange de matière vitrifiable inerte du type gravier ou laitier inerte car cela n'est pas nécessaire pour tester le liant minéral selon l'invention. Le résultat de ces tests sont rapportés dans la partie gauche du tableau 2 dans la colonne « Résistance compression (MPa) en 4x4x16 cm», et ce, en fonction du nombre de jours (de 3 à 28 jours). Pour d'autres tests, on a réalisé les mêmes compositions que dans le tableau 1 sauf que la fibre était absente. La matière d'encollage était ajoutée à la composition sans être déposée au préalable sur de la fibre. Dans ce test, on apprécie le temps de prise de la masse de mélange pendant son durcissement en donnant une note de 0 (aucune solidité) à 3 (très bonne solidité) à partir de la résistance à la pénétration d'une spatule, et ce, en fonction du nombre de jours (de 1 à 28 jours). Ces résultats sont rapportés dans la partie droite du tableau 2 dans la colonne « Temps de prise (0 à 3) sur pâte (sans fibres) ».

**Tableau 2**

| | **Résistance compression (Mpa) en 4x4x16cm** | | | | | | | **Temps de prise (0 à 3) sur pâte (sans fibres)** | | | | | |
|---|---|---|---|---|---|---|---|---|---|---|---|---|---|
| **Ex N°** | 3j | 4j | 7j | 10j | 14j | 28j | | 1j | 2j | 3j | 7j | 14j | 28j |
| **A1** | 0 | | 0 | | 0 | 0 | | 0 | 0 | 0 | 0 | 0 | 0 |
| **A2** | | | 8,4 | | 25 | 30 | | 0 | 0 | 0 | 1 | 2 | 3 |
| **A3** | | | 6,1 | | 21 | 27 | | 3 | 3 | 3 | 3 | 3 | 3 |
| **A4** | | | 7,6 | | 23 | 28 | | 3 | 3 | 3 | 3 | 3 | 3 |
| **A5** | | | | 15,1 | 26 | 35 | | 3 | 3 | 3 | 3 | 3 | 3 |
| **A6** | | | < 3 | | < 3 | < 3 | | 0 | 0 | 0 | 0 | 0 | 0 |
| **A7** | | | 7 | 10,1 | 13,1 | 25 | | 3 | 3 | 3 | 3 | 3 | 3 |
| **A8** | | | | | | | | 2 | 3 | 3 | 3 | 3 | 3 |
| **A9** | | | 11 | | 15,6 | 20 | | 3 | 3 | 3 | 3 | 3 | 3 |
| **A10** | | 10,4 | 17 | | | 35,1 | | 3 | 3 | 3 | 3 | 3 | 3 |
| **A11** | | 7,4 | 13 | | 22,6 | 25 | | 3 | 3 | 3 | 3 | 3 | 3 |
| **A12** | | 5,8 | 13 | | 26,3 | 30 | | 3 | 3 | 3 | 3 | 3 | 3 |
| **A13** | | | 3,9 | | 6,75 | 9,9 | | 0 | 0 | 1 | 2 | 3 | 3 |
| **A14** | | | 2,8 | | 5 | 6,1 | | 0 | 0 | 0 | 0 | 1 | 2 |
| **A15** | | | 7,95 | | 23,8 | 30,1 | | 3 | 3 | 3 | 3 | 3 | 3 |
| **A16** | | | 0,8 | | 3 | 27,9 | | 0 | 0 | 1 | 2 | 3 | 3 |
| **A17** | | | < 3 | | < 3 | < 3 | | 0 | 0 | 0 | 0 | 1 | 2 |

On constate que les exemples à forts taux de ciment dans le cas de la présence d'un encollage comprenant du sucre conduisent à des mauvais résultats. Les exemples A5 et A10 comprenant la plus forte quantité de porteur d'alcalino-terreux donnent les meilleurs résultats en termes de résistance à la compression. En particulier la comparaison des exemples A4 et A10 montre que l'augmentation de la quantité en porteur d'alcalino-terreux améliore grandement les résultats. En effet, on voit sur le tableau 1 que les compositions de ces deux exemples sont identiques sauf que l'on a ajouté un peu de CaCO₃ pour l'exemple A10.

Le tableau 3 donne les nombres de moles en silice non cimentaire, alcalino-terreux non cimentaire et alcalin non-cimentaire pour les mélanges des exemples du tableau 1.

**Tableau 3**

| **Ex N°** | **SiO2 non cimentaire** | **alcalino-terreux non cimentaire** | **alcalin non cimentaire** |
|---|---|---|---|
| **A1** | 0 | 0 | 0 |
| **A2** | 0 | 0 | 0 |
| **A3** | 0,068 | 0,104 | 0,05 |
| **A4** | 0,071 | 0,109 | 0,05 |
| **A5** | 0,064 | 0,129 | 0,08 |
| **A6** | 0,032 | 0,055 | 0 |
| **A7** | 0,085 | 0,109 | 0,04 |
| **A8** | 0,082 | 0,104 | 0,04 |
| **A9** | 0,085 | 0,109 | 0,076 |
| **A10** | 0,072 | 0,123 | 0,05 |
| **A11** | 0,052 | 0,087 | 0,08 |
| **A12** | 0,045 | 0,076 | 0,08 |
| **A13** | 0,032 | 0,055 | 0,08 |
| **A14** | 0,000 | 0,000 | 0,08 |
| **A15** | 0,052 | 0,107 | 0,08 |
| **A16** | 0,032 | 0,074 | 0,08 |
| **A17** | 0,000 | 0,019 | 0,08 |

Les compositions indiquées dans le tableau 1 sont dépourvues de forts taux de charge minérale inerte de façon à faciliter la réalisation des éprouvettes pour les tests de durcissement. Cependant, en exploitation réelle, on introduit habituellement dans le mélange des granulats de charge minérale inerte comme du gravier ou du laitier grossier inerte. Ces deux charges sont cristallines et faites de grosses particules et ne sont pas porteurs de silice ou d'alcalin ou d'alcalino-terreux au sens de l'invention. Les exemples B1 à B17 illustrent des compositions à plus fort taux de charge minérale inerte.

### EXEMPLES B1 à B17

Le tableau 4 donne les pourcentages en poids de tous les ingrédients de mélanges correspondants à ceux du tableau 1 auxquelles ont cependant été ajoutés 24 parties en poids de granulats de charge minérale inerte constitués de 14 parties en poids de gravier et 20 parties en poids de laitier grossier inerte. La colonne « charge minérale inerte » représente la somme des pourcentages de toutes les charges inertes introduites y compris les résidus minéraux indiqués dans le tableau 1.

**Tableau 4 (% en poids)**

| Ex N° | Fibre | Encollage avec sucre | Résine Phén. | eau totale | ciment | Laitier actif | silicate sodium Na2SiO3. 5H2O | NaOH | Na2CO3 | Ca (OH)2 | CaCO3 | Charge Minérale inerte |
|---|---|---|---|---|---|---|---|---|---|---|---|---|
| **B1** | 31,61 | 0,66 | | 15,05 | 11,29 | | | | | | | 41,38 |
| **B2** | 31,61 | 0,00 | 0,66 | 15,05 | 11,29 | | | | | | | 41,38 |
| **B3** | 30,77 | 0,64 | | 14,65 | 0,55 | 10,44 | 1,32 | 1,32 | | | | 40,3 |
| **B4** | 30,77 | 0,64 | | 14,65 | | 10,99 | 1,32 | 1,32 | | | | 40,3 |
| **B5** | 29,98 | 0,62 | | 14,28 | | 10,71 | | | 3,86 | 1,29 | | 39,26 |
| **B6** | 31,61 | 0,66 | | 15,05 | 5,64 | 5,64 | | | | | | 41,38 |
| **B7** | 30,37 | 0,63 | | 14,46 | | 10,85 | 3,91 | | | | | 39,78 |
| **B8** | 30,37 | 0,63 | | 14,46 | 0,54 | 10,31 | 3,91 | | | | | 39,78 |
| **B9** | 29,98 | 0,62 | | 14,28 | | 10,71 | 3,86 | 1,29 | | | | 39,26 |
| **810** | 30,37 | 0,63 | | 14,46 | | 10,85 | 1,30 | 1,30 | | | 1,30 | 39,78 |
| **B11** | 30,37 | 0,63 | | 14,46 | 2,17 | 8,68 | | | 3,91 | | | 39,78 |
| **812** | 30,37 | 0,63 | | 14,46 | 3,25 | 7,59 | | | 3,91 | | | 39,78 |
| **B13** | 30,37 | 0,63 | | 14,46 | 5,42 | 5,42 | | | 3,91 | | | 39,78 |
| **B14** | 30,37 | 0,63 | | 14,46 | 10,85 | | | | 3,91 | | | 39,78 |
| **B15** | 29,98 | 0,62 | | 14,28 | 2,14 | 8,57 | | | 3,86 | 1,29 | | 39,26 |
| **B16** | 29,98 | 0,62 | | 14,28 | 5,35 | 5,35 | | | 3,86 | 1,29 | | 39,26 |
| **B17** | 29,98 | 0,62 | | 14,28 | 10,71 | | | | 3,86 | 1,29 | | 39,26 |

Le tableau 5 donne les nombres de mole par kg de briquette en différents porteurs et certains rapports pour les compositions des exemples du tableau 4.

**Tableau 5**

| **Ex N°** | **Nombre mole SiO₂ non cimentaire 1 kg briquette** | **Nombre mole alcalino-terreux non cimentaire 1 kg briquette** | **Nombre mole alcalin non cimentaire / kg briquette** | **Somme nombre de moles de silice et d'alcalin / kg de briquette** | **Rapport du nombre de moles de silice sur le nombre de mole d'alcalin** | **Rapport masse de ciment sur masse de porteurs de silice** |
|---|---|---|---|---|---|---|
| **B 1** | 0,000 | 0,000 | 0,000 | 0,000 | | |
| **B2** | 0,000 | 0,000 | 0,000 | 0,000 | - | - |
| **B3** | 0,623 | 0,953 | 0,458 | 1,081 | 1,360 | 0,05 |
| **B 4** | 0,650 | 0,998 | 0,458 | 1,108 | 1,420 | 0,00 |
| **B 5** | 0,571 | 1,151 | 0,714 | 1,285 | 0,800 | 0,00 |
| **B6** | 0,301 | 0,517 | 0,000 | 0,301 | - | 1,00 |
| **B 7** | 0,768 | 0,985 | 0,362 | 1,130 | 2,125 | 0,00 |
| **B 8** | 0,741 | 0,940 | 0,362 | 1,103 | 2,050 | 0,04 |
| **B 9** | 0,759 | 0,973 | 0,678 | 1,437 | 1,118 | 0,00 |
| **B10** | 0,651 | 1,112 | 0,452 | 1,103 | 1,440 | 0,00 |
| **B11** | 0,470 | 0,786 | 0,723 | 1,193 | 0,650 | 0,25 |
| **B12** | 0,407 | 0,687 | 0,723 | 1,130 | 0,563 | 0,43 |
| **B13** | 0,289 | 0,497 | 0,723 | 1,012 | 0,400 | 1,00 |
| **B14** | 0,000 | 0,000 | 0,723 | 0,723 | 0,000 | - |
| **B15** | 0,464 | 0,955 | 0,714 | 1,178 | 0,650 | 0,25 |
| **B16** | 0,286 | 0,660 | 0,714 | 0,999 | 0,400 | 1,00 |
| **B17** | 0,000 | 0,170 | 0,714 | 0,714 | 0,000 | - |

## Revendications

1. Procédé de préparation d'un composite conformé, comprenant
- la préparation d'un mélange dans lequel on introduit des fragments de laine minérale comprenant un encollage comprenant un sucre, un porteur de silice non-cimentaire distinct de la laine, un porteur d'alcalin non-cimentaire distinct de la laine, et de l'eau, le porteur de silice non-cimentaire et le porteur d'alcalin non-cimentaire formant avec l'eau un liant minéral se solidifiant progressivement autour des particules solides contenues dans le mélange, puis,
- la conformation du mélange en un composite conformé l'expression « non-cimentaire » indiquant que le composé auquel elle est attachée n'est pas un ciment, où un ciment est :
- une matière anhydre en poudre comprenant du silicate de calcium cristallisé ou de l'aluminate de calcium cristallisé,
- un composé minéral hydraulique conduisant à la formation en présence d'eau de silicate de calcium hydraté ou d'aluminate de calcium hydraté, et
- essentiellement cristallisé et contient moins de 10% en poids d'amorphe,
dans lequel aucun ciment n'est introduit dans le mélange ou, lorsque du ciment est introduit dans le mélange, le rapport de la masse de ciment sur la masse de porteur de silice non-cimentaire est inférieur à 1.

2. Procédé selon la revendication précédente, **caractérisé en ce que** le pH du mélange est au moins égal à 10 et de manière préférée au moins égal à 11.

3. Procédé selon l'une des revendications précédentes **caractérisé en ce que** lesdits fragments de laine minérale comprennent une laine de roche ou une laine de verre.

4. Procédé selon l'une des revendications précédentes **caractérisé en ce que** lesdits fragments de laine minérale sont introduits dans le mélange à raison de 10 à 60% en poids du mélange.

5. Procédé selon l'une des revendications précédentes **caractérisé en ce que** la somme du poids des porteurs de silice non-cimentaire et d'alcalin non-cimentaire représente de 5 à 30% en poids du mélange.

6. Procédé selon l'une des revendications précédentes **caractérisé en ce que** le mélange comprend 5 à 50% en poids de granulats, notamment de D50 supérieur à 200 µm.

7. Procédé selon l'une des revendications précédentes **caractérisé en ce que** la somme du nombre de mole de silice apporté au mélange par le porteur de silice non-cimentaire et du nombre de mole d'alcalin apporté au mélange par le porteur d'alcalin non-cimentaire est supérieure à 0,5 mole par kg de mélange, notamment comprise entre 0,5 et 3 moles par kg de mélange.

8. Procédé selon l'une des revendications précédentes **caractérisé en ce que** la composition d'encollage est présente dans les fragments de laine minérale à raison de 0,1 à 10% en poids et plus particulièrement à raison de 0,5 à 7% en poids de matière sèche d'encollage par rapport au poids total de fragments de laine sèche.

9. Procédé selon l'une des revendications précédentes **caractérisé en ce qu'**aucun ciment n'est introduit dans le mélange ou **en ce que** du ciment est introduit dans le mélange à raison de moins de 8% et de préférence moins de 4% et de manière encore préférée moins de 3% en poids du mélange.

10. Procédé selon l'une des revendications précédentes **caractérisé en ce qu'**aucun ciment n'est introduit dans le mélange ou **en ce que** du ciment est introduit dans le mélange, le rapport de la masse de ciment sur la masse de porteur de silice non-cimentaire étant inférieure à 0,5.

11. Procédé selon l'une des revendications précédentes **caractérisé en ce que** le rapport du nombre de mole de silice apporté au mélange par le porteur de silice non-cimentaire sur le nombre de mole d'alcalin apporté au mélange par le porteur d'alcalin non-cimentaire va de 0,2 à 3.

12. Procédé selon l'une des revendications précédentes **caractérisé en ce que** le porteur de silice non-cimentaire apporte au mélange au moins 0,1 mole de silice par kg de mélange, notamment jusqu'à 3 moles de silice par kg de mélange, et de préférence de 0,1 à 2 moles de silice par kg de mélange.

13. Procédé selon l'une des revendications précédentes **caractérisé en ce que** le porteur d'alcalin non-cimentaire apporte au mélange au moins 0,1 mole d'alcalin par kg de mélange, et de préférence de 0,1 à 1,5 moles d'alcalin par kg de mélange.

14. Procédé selon l'une des revendications précédentes **caractérisé en ce qu'**un porteur d'alcalino-terreux non-cimentaire distinct de la laine est présent dans le mélange, notamment à raison d'au moins 0,3 moles d'alcalino-terreux par kg de mélange, notamment jusqu'à 3 moles d'alcalino-terreux par kg de mélange, et de préférence de 0,3 à 2 moles d'alcalino-terreux par kg de mélange.

15. Procédé selon la revendication précédente, **caractérisé en ce que** le porteur d'alcalino-terreux non-cimentaire comprend Ca(OH)₂ ou CaCO₃.

16. Procédé selon l'une des revendications précédentes, **caractérisé en ce que** le porteur de silice non-cimentaire comprend un silicate de sodium ou un laitier, ledit laitier comprenant au moins 10% en poids de silice, étant amorphe à plus de 80% de son poids et son D50 étant inférieur ou égal à 100µm.

17. Procédé selon l'une des revendications précédentes, **caractérisé en ce que** le porteur d'alcalin non-cimentaire comprend de la soude ou du silicate de sodium ou du carbonate de sodium.

18. Procédé selon l'une des revendications précédentes, **caractérisé en ce que** l'eau est présente dans le mélange à raison de 5 à 30% du poids du mélange.

19. Procédé selon l'une des revendications précédentes **caractérisé en ce que** le sucre est présent dans la composition d'encollage à raison de 30 à 90% en poids de la matière sèche de l'encollage.

20. Procédé selon l'une des revendications précédentes, **caractérisé en ce que** le D50 du porteur de silice non cimentaire est inférieur ou égal à 100µm et de préférence inférieur ou égal à 50µm.

21. Procédé selon l'une des revendications précédentes, **caractérisé en ce que** le porteur de silice non-cimentaire et le porteur d'alcalino-terreux non-cimentaire comprennent un même laitier, le porteur d'alcalin non-cimentaire comprend du carbonate de sodium, du ciment étant introduit dans le mélange à raison de moins de 8% et de préférence moins de 4% et de manière encore préférée moins de 3% en poids du mélange, l'eau étant présente dans le mélange de préférence à raison de 5 à 30% du poids du mélange.

22. Procédé selon la revendication précédente, **caractérisé en ce que** du ciment est introduit dans le mélange à raison d'au moins 0,1 % en poids du mélange.

23. Procédé selon l'une des deux revendications précédentes, **caractérisé en ce que** plus de 50% du nombre de moles de silice apportés au mélange par le porteur de silice non-cimentaire et plus de 50% du nombre de moles d'alcalino-terreux apportés au mélange par le porteur d'alcalino-terreux non-cimentaire sont apportés au mélange par le même laitier.

24. Procédé selon l'une des trois revendications précédentes, **caractérisé en ce que** plus de 50% du nombre de moles d'alcalin apportés au mélange par le porteur d'alcalin non-cimentaire sont apportés au mélange par du carbonate de sodium.

25. Procédé selon l'une des revendications précédentes, **caractérisé en ce que** les composites conformés sont des briquettes, la transformation du mélange en briquette étant obtenue par moulage et éventuellement compaction.

26. Procédé de fabrication de laine minérale, dans lequel on produit une masse en fusion que l'on transforme en laine minérale au moyen d'un dispositif de fibrage, **caractérisé en ce que** l'on introduit un composite conformé obtenu selon l'une quelconque des revendications précédentes en tant que charge vitrifiable, dans une enceinte de fusion tel qu'un four cubilot.

## Patentansprüche

1. Verfahren zum Herstellen eines geformten Verbundstoffs, umfassend
- Herstellen einer Mischung, in die Fragmente aus Mineralwolle eingeführt werden, umfassend eine Verleimung, umfassend einen Zucker, einen nicht zementartigen Siliciumdioxidträger, der von der Wolle getrennt ist, einen nicht zementartigen Alkaliträger, der von der Wolle getrennt ist, und Wasser, wobei der nicht zementartige Siliciumdioxidträger und der nicht zementartige Alkaliträger mit dem Wasser ein Mineralbindemittel ausbilden, das sich allmählich um feste Teilchen herum, die in der Mischung enthalten sind, verfestigt, dann
- Formen der Mischung zu einem geformten Verbundstoff, wobei der Ausdruck "nicht zementartig" angibt, dass die Verbindung, an die sie gebunden ist, kein Zement ist, wobei ein Zement ist:
- ein wasserfreies Pulvermaterial, umfassend kristallisiertes Calciumsilicat oder kristallisiertes Calciumaluminat,
- eine hydraulische Mineralverbindung, die in Gegenwart von hydratisiertem Calciumsilicatwasser oder hydratisiertem Calciumaluminat zu der Formierung führt, und
- im Wesentlichen kristallisiert und weniger als 10 Gew.-% amorphes Material enthält,
**dadurch gekennzeichnet, dass** kein Zement in die Mischung eingeführt wird oder **dadurch, dass** der Zement in die Mischung eingeführt wird, wobei das Verhältnis von der Masse des Zements zu der Masse des nicht zementartigen Siliciumdioxidträgers unter 1 liegt.

2. Verfahren nach dem vorstehenden Anspruch,
**dadurch gekennzeichnet, dass** der pH-Wert der Mischung mindestens gleich 10 und bevorzugt mindestens gleich 11 ist.

3. Verfahren nach einem der vorstehenden Ansprüche,
**dadurch gekennzeichnet, dass** die Fragmente aus Mineralwolle eine Gesteinswolle oder eine Glaswolle umfassen.

4. Verfahren nach einem der vorstehenden Ansprüche,
**dadurch gekennzeichnet, dass** die Fragmente aus Mineralwolle im Umfang von 10 bis 60 Gew.-% der Mischung in die Mischung eingeführt werden.

5. Verfahren nach einem der vorstehenden Ansprüche,
**dadurch gekennzeichnet, dass** die Summe des Gewichts der nicht zementartigen Siliciumdioxid- und Alkaliträger von 5 bis 30 Gew.-% der Mischung darstellt.

6. Verfahren nach einem der vorstehenden Ansprüche,
**dadurch gekennzeichnet, dass** die Mischung zu 5 bis 50 Gew.-% Granulate umfasst, insbesondere mit D50 von mehr als 200 µm.

7. Verfahren nach einem der vorstehenden Ansprüche,
**dadurch gekennzeichnet, dass** die Summe der Molzahl von Siliciumdioxid, das durch den nicht zementartigen Siliciumdioxidträger in die Mischung eingebracht wird, und der Molzahl von Alkali, das durch den nicht zementartigen Alkaliträger die Mischung eingebracht wird, mehr als 0,5 Mol pro kg der Mischung beträgt, insbesondere zwischen 0,5 und 3 Mol pro kg der Mischung.

8. Verfahren nach einem der vorstehenden Ansprüche,
**dadurch gekennzeichnet, dass** die Leimzusammensetzung in den Fragmenten aus Mineralwolle im Umfang von 0,1 bis 10 Gew.-% und insbesondere im Umfang von 0,5 bis 7 Gew.-% des trockenen Leimmaterials bezogen auf das Gesamtgewicht der Fragmente aus trockener Wolle vorhanden ist.

9. Verfahren nach einem der vorstehenden Ansprüche,
**dadurch gekennzeichnet, dass** kein Zement in die Mischung eingeführt wird oder **dadurch, dass** der Zement im Umfang von weniger als 8 Gew.-% und vorzugsweise weniger als 4 Gew.-% und weiter bevorzugt weniger als 3 Gew.-% der Mischung in die Mischung eingeführt wird.

10. Verfahren nach einem der vorstehenden Ansprüche,
**dadurch gekennzeichnet, dass** kein Zement in die Mischung eingeführt wird oder **dadurch, dass** der Zement in die Mischung eingeführt wird, wobei das Verhältnis von der Masse des Zements zu der Masse des nicht zementartigen Siliciumdioxidträgers unter 0,5 liegt.

11. Verfahren nach einem der vorstehenden Ansprüche,
**dadurch gekennzeichnet, dass** das Verhältnis von der Molzahl von Siliciumdioxid, das durch den nicht zementartigen Siliciumdioxidträger in die Mischung eingebracht wird, zu der Molzahl von Alkali, das durch den nicht zementartigen Alkaliträger die Mischung eingebracht wird, von 0,2 bis 3 reicht.

12. Verfahren nach einem der vorstehenden Ansprüche,
**dadurch gekennzeichnet, dass** der nicht zementartige Siliciumdioxidträger mindestens 0,1 Mol Siliciumdioxid pro kg der Mischung in die Mischung einbringt, insbesondere bis zu 3 Mol Siliciumdioxid pro kg der Mischung und vorzugsweise von 0,1 bis 2 Mol Siliciumdioxid pro kg der Mischung.

13. Verfahren nach einem der vorstehenden Ansprüche,
**dadurch gekennzeichnet, dass** der nicht zementartige Alkaliträger mindestens 0,1 Mol Alkali pro kg der Mischung in die Mischung einbringt, und vorzugsweise von 0,1 bis 1,5 Mol Alkali pro kg der Mischung.

14. Verfahren nach einem der vorstehenden Ansprüche,
**dadurch gekennzeichnet, dass** ein nicht zementartiger Erdalkaliträger, der von der Wolle getrennt ist, in der Mischung vorhanden ist, insbesondere im Umfang von mindestens 0,3 Mol Erdalkali pro kg Mischung, insbesondere bis zu 3 Mol Erdalkali pro kg der Mischung, und vorzugsweise 0,3 bis 2 Mol Erdalkali pro kg der Mischung.

15. Verfahren nach dem vorstehenden Anspruch,
**dadurch gekennzeichnet, dass** der nicht zementartige Erdalkaliträger Ca(OH)₂ oder CaCO₃ umfasst.

16. Verfahren nach einem der vorstehenden Ansprüche,
**dadurch gekennzeichnet, dass** der nicht zementartige Siliciumdioxidträger ein Natriumsilicat oder eine Schlacke umfasst, die Schlacke umfassend mindestens 10 Gew.-% Siliciumdioxid, das zu mehr als 80 % seines Gewichts amorph ist und dessen D50 kleiner als oder gleich 100 µm ist.

17. Verfahren nach einem der vorstehenden Ansprüche,
**dadurch gekennzeichnet, dass** der nicht zementartige Alkaliträger Natron oder Natriumsilicat oder Natriumcarbonat umfasst.

18. Verfahren nach einem der vorstehenden Ansprüche,
**dadurch gekennzeichnet, dass** Wasser in der Mischung im Umfang von 5 bis 30 % des Gewichts der Mischung vorhanden ist.

19. Verfahren nach einem der vorstehenden Ansprüche,
**dadurch gekennzeichnet, dass** der Zucker in der Leimzusammensetzung im Umfang von 30 bis 90 Gew.-% des trockenen Leimmaterials vorhanden ist.

20. Verfahren nach einem der vorstehenden Ansprüche,
**dadurch gekennzeichnet, dass** der D50 des nicht zementartigen Siliciumdioxidträgers kleiner als oder gleich 100 µm ist und vorzugsweise kleiner als oder gleich 50 µm.

21. Verfahren nach einem der vorstehenden Ansprüche,
**dadurch gekennzeichnet, dass** der nicht zementartige Siliciumdioxidträger und der nicht zementartige Erdalkaliträger eine gleiche Schlacke umfassen, wobei der nicht zementartige Alkaliträger Natriumcarbonat umfasst, wobei Zement im Umfang von weniger als 8 Gew.-% und vorzugsweise weniger als 4 Gew.-% und weiter bevorzugt weniger als 3 Gew.-% der Mischung in die Mischung eingeführt wird, wobei Wasser in der Mischung vorzugsweise im Umfang von 5 bis 30 % des Gewichts der Mischung vorhanden ist.

22. Verfahren nach dem vorstehenden Anspruch,
**dadurch gekennzeichnet, dass** der Zement im Umfang von mindestens 0,1 Gew.-% der Mischung in die Mischung eingeführt wird.

23. Verfahren nach einem der zwei vorstehenden Ansprüche,
**dadurch gekennzeichnet, dass** über 50 % der Molzahl von Siliciumdioxid, die durch den nicht zementartigen Siliciumdioxidträger in die Mischung eingebracht wird, und über 50 % der Zahl von Molen Erdalkali, die durch den nicht zementartigen Erdalkaliträger in die Mischung eingebracht werden, durch dieselbe Schlacke in die Mischung eingebracht werden.

24. Verfahren nach einem der drei vorstehenden Ansprüche,
**dadurch gekennzeichnet, dass** über 50 % der Zahl der Mole von Alkali, die durch den nicht zementartigen Alkaliträger eingebracht werden, durch Natriumcarbonat in die Mischung eingebracht werden.

25. Verfahren nach einem der vorstehenden Ansprüche,
**dadurch gekennzeichnet, dass** die geformten Verbundstoffe Briketts sind, wobei die Umformung der Mischung in ein Brikett durch Abformen und wahlweise Verdichten erreicht wird.

26. Verfahren zum Anfertigen von Mineralwolle, wobei eine Schmelze produziert wird, die mittels einer Zerfaserungsvorrichtung zu Mineralwolle umgeformt wird, **dadurch gekennzeichnet, dass** einer geformter Verbundstoff nach einem der vorstehenden Ansprüche als verglasbare Ladung in eine Schmelzkammer, wie etwa einen Kuppelofen, eingeführt wird.

## Claims

1. A process for preparing of a shaped composite, the process comprising:
- preparing a mixture into which fragments of mineral wool comprising a sizing composition comprising a sugar, a non-cement silica carrier distinct from the wool, a non-cement alkali metal carrier distinct from the wool, and water, are introduced, such that the non-cement silica carrier and the non-cement alkali metal carrier form, with the water, a mineral binder that gradually solidifies around solid particles present in the mixture; and then
- shaping the mixture into a shaped composite,
the expression "non-cement" indicating that the compound to which it is attached is not a cement, where a cement is:
- an anhydrous powder material comprising crystalline calcium silicate or crystalline calcium aluminate.
- a hydraulic mineral compound resulting in the formation, in the presence of water, of hydrated calcium silicate or hydrated calcium aluminate, and
- essentially crystalline and comprises less than 10% by weight of amorphous material,
wherein either no cement is introduced into the mixture or cement is introduced into the mixture such that a ratio of weight of the cement to weight of non-cement silica carrier is less than 1.

2. The process according to the preceding claim, wherein a pH of the mixture is at least equal to 10, and preferably at least equal to 11.

3. The process according to one of the preceding claims, wherein the fragments of mineral wool comprise a rock wool or a glass wool.

4. The process according to one of the preceding claims, wherein the fragments of mineral wool are introduced into the mixture in a proportion of 10 to 60% by weight of the mixture.

5. The process according to one of the preceding claims, wherein a sum of weights of the non-cement silica carrier and the non-cement alkali metal carrier is from 5 to 30% by weight of the mixture.

6. The process according to one of the preceding claims, wherein the mixture comprises from 5 to 50% by weight of aggregates, having in particular a D50 greater than 200 µm.

7. The process according to one of the preceding claims, wherein a sum of the moles of silica introduced into the mixture by the non-cement silica carrier and of the moles of alkali metal introduced into the mixture by the non-cement alkali metal carrier is greater than 0.5 mol per kg of mixture, in particular comprised between 0.5 and 3 mol per kg of mixture.

8. The process according to one of the preceding claims, wherein the sizing composition is present in the fragments of mineral wool in a proportion of 0.1 to 10% by weight and more particularly of 0.5 to 7% by weight of dry matter of sizing with respect to a total weight of fragments of dry wool.

9. The process according to one of the preceding claims, wherein either no cement is introduced into the mixture or cement is introduced into the mixture in a proportion of less than 8%, preferably less than 4%, or more preferably less than 3%, by weight of the mixture.

10. The process according to one of the preceding claims, wherein either no cement is introduced into the mixture or cement is introduced into the mixture such that a ratio of weight of the cement to weight of non-cement silica carrier is less than 0.5.

11. The process according to one of the preceding claims, wherein a ratio of number of moles of silica introduced into the mixture by the non-cement silica carrier to moles of alkali metal introduced into the mixture by the non-cement alkali metal carrier ranges from 0.2 to 3.

12. The process according to one of the preceding claims, wherein the non-cement silica carrier introduces into the mixture at least 0.1 mol of silica per kg of the mixture, in particular at most 3 mol of silica per kg of the mixture, preferably from 0.1 to 2 mol of silica per kg of the mixture.

13. The process according to one of the preceding claims, wherein the non-cement alkali metal carrier introduces into the mixture at least 0.1 mol of alkali metal per kg of mixture, preferably from 0.1 to 1.5 mol of alkali metal per kg of the mixture.

14. The process according to one of the preceding claims, wherein a non-cement alkaline earth metal carrier distinct from the wool is present in the mixture, in particular in a proportion of at least 0.3 mol of alkaline earth metal per kg of the mixture, in particular at most 3 mol of alkaline earth metal per kg of the mixture, preferably from 0.3 to 2 mol of alkaline earth metal per kg of the mixture.

15. The process according to the preceding claim, wherein the non-cement alkaline earth metal carrier comprises Ca(OH)2 or CaCO3 .

16. The process according to one of the preceding claims, wherein the non-cement silica carrier comprises a sodium silicate or a slag, said slag comprising at least 10% by weight of silica, being amorphous to more than 80% of its weight and its D50 being less than or equal to 100 µm.

17. The process according to one of the preceding claims, wherein the non-cement alkali metal carrier comprises sodium hydroxide, sodium silicate or sodium carbonate.

18. The process according to one of the preceding claims, wherein the water is present in the mixture in a proportion of 5 to 30% of the weight of the mixture.

19. The process according to one of the preceding claims, wherein the sugar is present in the sizing composition in a proportion of 30 to 90% by weight of the dry matter of the sizing.

20. The process according to one of the preceding claims, wherein the D50 of the non-cement silica carrier is less than or equal to 100 µm, preferably less than or equal to 50 µm.

21. The process according to one of the preceding claims, wherein the non-cement silica carrier and the non-cement alkaline earth metal carrier comprise one same slag, and the non-cement alkali metal carrier comprises sodium carbonate; cement being introduced into the mixture in a proportion of less than 8%, preferably less than 4%, more preferably less than 3% by weight of the mixture, the water being present in the mixture preferably in a proportion of 5 to 30 % by weight of the mixture.

22. The process according to the preceding claim, wherein the cement is introduced into the mixture in a proportion of at least 0.1% by weight of the mixture.

23. The process according to one of the two preceding claims, wherein more than 50% of moles of silica introduced into the mixture by the non-cement silica carrier and more than 50% of moles of alkaline earth metal introduced into the mixture by the non-cement alkaline earth metal carrier are introduced into the mixture by the same slag.

24. The process according to one of the three preceding claims, wherein more than 50% of moles of alkali metal introduced into the mixture by the non-cement alkali metal carrier are introduced into the mixture by sodium carbonate.

25. The process according to one of the preceding claims, wherein the shaped composites are in the form of briquettes, in which conversion of the mixture into the briquettes is obtained by molding and optionally compaction.

26. A process for manufacturing mineral wool, the process comprising producing a molten mass that is converted into mineral wool with a fiberizing device, wherein a shaped composite according to one of the preceding claims is introduced as a vitrifiable charge into a melting chamber, such as a cupola furnace.
